# EUROPÄISCHE PATENTANMELDUNG

(11) **EP 0 734 767 A2**
(43) Veröffentlichungstag der Anmeldung: **02.10.1996**
(21) Anmeldenummer: 96104921.0
(22) Anmeldetag: 28.03.1996
(51) Int. Cl.: B01L 3/00, B01L 3/14

(54) **Gefäss zur kontaminationsreduzierten Behandlung von Flüssigkeiten**

(30) Priorität: 01.04.1995 DE 29505652 U
(71) Anmelder: BOEHRINGER MANNHEIM GMBH, 68298 Mannheim (DE)
(72) Erfinder: Bienhaus, Gerhard, Dr., 82407 Wielenbach (DE); Fritz, Michael, 68647 Biblis (DE); Schwab, Jürgen, 68775 Ketsch (DE); Geisler, Edda, 68199 Mannheim (DE); Harttig, Herbert, Dr., 67122 Altrip (DE); Macho, Heinz, 64658 Fürth (DE)

(57) **Zusammenfassung**

Ein Gefäß mit einer Einlaß-(A10) und einer Auslaß-(A11)Öffnung, bei dem die Auslaßöffnung durch ein Bauteil (A12) verschlossen ist, welches elastisch gegen die Auslaßöffnung drückt, ist besonders geeignet zur kontaminationsreduzierten Behandlung von Flüssigkeiten, insbesondere nukleinsäurehaltigen flüssigen Proben.

## Beschreibung

Gegenstand der Erfindung ist ein Gefäß zur kontaminationsreduzierten Behandlung von Flüssigkeiten mit einer Einlaß- und einer Auslaßöffnung, bei dem die Auslaßöffnung auf besondere Weise verschlossen ist.

In vielen Anwendungsgebieten erfordert die Behandlung von Flüssigkeiten besondere Sorgfalt im Hinblick auf eine aktive Vermeidung der Entstehung von Kontaminationen, die einen schädlichen Einfluß auf die Umgebung ausüben könnten. Dies gilt insbesondere für giftige Flüssigkeiten, jedoch auch für üblicherweise während Analysen von Inhaltsstoffen anfallende Flüssigkeiten. In der Regel werden nämlich Behandlungsschritte zur Vorbereitung einer Probenflüssigkeit für die Analyse in demselben Labor oder sogar Raum vorgenommen, wie die Analyse selbst. Zum Beispiel entstehen während der Behandlung Aerosole, die die Umgebung oft so stark z. B. mit Probenbestandteilen kontaminieren, daß die Analyse von Inhaltsstoffen anderer Proben dadurch verfälscht wird. Ein falsches Analyseergebnis kann insbesondere bei der Analyse von Inhaltsstoffen in der medizinischen bzw. klinischen Diagnostik für den Patienten schreckliche Folgen haben.

Analysen, die auf dem Nachweis von Nukleinsäuren in einer Probe beruhen, wurden in jüngerer Zeit wegen ihrer relativ hohen erreichbaren Spezifität als Diagnosehilfsmittel angeführt. Diese Tests stellen jedoch wegen des üblicherweise geringen Gehalts an Nukleinsäuren und insbesondere der nachzuweisenden Nukleinsäuren bei gleichzeitiger Anwesenheit von Nukleinsäuren ähnlicher Sequenz sowie anderer Inhaltsstoffe, die Nukleinsäurebestimmungen empfindlich stören können eine erhebliche technische Herausforderung dar. Es hat sich herausgestellt, daß die in letzter Zeit immer populärer werdenden Amplifikationsverfahren, mit denen in einer Reaktion, abhängig von der Anwesenheit einer ganz bestimmten, nachzuweisenden Nukleinsäuresequenz eine Vielzahl identischer Nukleinsäuren hergestellt werden können, die Empfindlichkeit der Tests wesentlich verbessern können, so daß manchmal sogar einzelne Nukleinsäuren nachgewiesen werden können. Die hohe erreichbare Empfindlichkeit der Nachweise hat jedoch auch zur Folge, daß Kontaminationen (Verunreinigungen) von anderen Proben mit selbst nur einer einzigen Nukleinsäure aus der Umgebung zu einem positiven Analyseergebnis führen kann und so ein positives Analyseergebnis vorgetäuscht wird. Aus diesem Grund muß für Nukleinsäuretests eine besonders effektive Vermeidung bereits der Entstehung von Kontaminationen, d. h. der Austritt von Nukleinsäuren aus einer Probe oder einem Reaktionsgemisch in die Umgebung, betrieben werden.

Bei der Vorbereitung von Proben zur Analyse von Inhaltsstoffen, insbesondere Nukleinsäuren, werden in jüngerer Zeit in vermehrten Umfang Verfahren eingesetzt, bei denen die Probenflüssigkeit und darin enthaltene oder daraus isolierte Inhaltsstoffe in einem Gefäß einer Behandlung unterzogen werden, bei der eine Flüssigkeit durch eine Einlaßöffnung in das Gefäß eingebracht wird und die Flüssigkeit nach einem oder mehreren Behandlungsschritten durch eine Auslaßöffnung aus dem Gefäß entfernt wird. Solche Gefäße sind auf dem Markt in Form von Säulen erhältlich, die beispielsweise Materialien zur Abtrennung von Inhaltsstoffen aus der Flüssigkeit enthalten, wie der QIAamp Kit der Firma Qiagen. Diese Gefäße befinden sich in einem Gefäß, so daß eventuell austretende Flüssigkeit in dieses Gefäß austritt und nicht in die Umgebung. Diese Art der Behandlung von Flüssigkeiten ist jedoch aufwendig und benötigt ein entsprechendes zweites Gefäß. Darüber hinaus werden diese Gefäße in Zentrifugen eingesetzt, um die Flüssigkeit in das zweite Gefäß zu schleudern.

In DE-A-4020442 ist ein System beschrieben, bei dem eine starre Dichtung die flächig Blutprobengefäße abdichtet, mit Hilfe einer Vorrichtung, die eine Nadel aufweist, aufgestochen wird. Diese Nadel kann durch eine Schutzkappe überdeckt sein. Zum Öffnen und Schließen des Gefäßes ist daher ein separates Werkzeug erforderlich.

In DE-A-4124577 ist ein Reagenzfläschchen beschrieben, welches an seiner Unterseite durch eine aufgeschraubte Hülse verschlossen ist.

In US-A-3,706,305 ist ein Container beschrieben, in dem Flüssigkeit über Nadeln, die eine Membran durchstechen, transportiert werden können.

In US-A-3,601,152 ist ein Ventil, bei dem ein elastisches Teil von einem Stutzen vollständig entfernt wird. Der Ansatzstutzen hat keine seitliche Öffnung.

Die Verwendung eines solchen Ventils zur Vermeidung von Kontaminationen ist nicht beschrieben.

In DE-C-4214634 ist eine Pipettierhilfe zum Ansaugen von Flüssigkeiten beschrieben, bestehend aus einem elastischen Hohlkörper und mehreren Ventilen zum Ein- und Auslaß von Luft.

In DE-C-4204554 ist eine Ampulle für Flüssigkeiten beschrieben, bei der eine Einlaßöffnung durch Durchstoßen einer Kunststoffmembran mit einer in einen Trichter integrierten Spitze durchstoßen wird. Die Entnahme von Flüssigkeit funktioniert nicht über die Verwendung von Druckdifferenzen.

In DE-A-3139702 ist ein Gefäß zur Handhabung von pasteusem Probenmaterial beschrieben. Die Auslaßöffnungen sind durch Schnappdeckel verschlossen.

In US-A-4,956,298 ist eine Trenn- oder Reaktionssäule beschrieben, die über Zentrifugation entleert werden kann. Eine Auslaßöffnung ist mit Hilfe eines Schnappdeckels verschlossen, der mechanisch entfernt werden muß.

In US-A-3,799,426 ist ein Container beschrieben, der im oberen Teil einen Vorsprung aufweist, der ein Durchfallen des Gefäßes durch eine Lochplatte verhindert.

In EP-A-0 561 003 ist ein Gefäß zur Aufnahme von Flüssigkeiten beschrieben, bei dem die Flüssigkeit beim Einlaß in das Gefäß durch mehrere Membranen durchgeführt wird. Der elastische Verschluß der Auslaßöffnung ist nicht vorgesehen.

In EP-A-0 182 370 ist eine Blutaufbewahrungsvorrichtung mit einem Blutaufnahmeröhrchen beschrieben, wobei das Blutaufnahmeröhrchen mit einer aufgesteckten Verschlußkappe dicht verschließbar ist. Eine Öffnung durch Druckdifferenzen ist nicht beabsichtigt.

In US-A-5,139,742 ist eine Vorrichtung beschrieben, die aus zwei Teilen besteht, die in eine Position gebracht werden können, die eine Flüssigkeitspassage erlauben. Die Auslaßöffnung in diesem Bauteil ist nicht elastisch durch ein Bauteil verschlossen. Die Öffnung des Flüssigkeitsweges findet nicht durch Druckunterschiede statt.

In DE-A-4021355 ist eine Blutentnahmevorrichtung beschrieben, die durch eine durchstechbare Elastikplatte verschlossen ist. Die Öffnung der Vorrichtung geschieht mit Hilfe einer Kanüle. Der Verschluß ist jedoch dafür vorgesehen, die Flüssigkeit in die Vorrichtung aufzunehmen. Hierzu wird über eine weitere Öffnung ein Vakuum erzeugt.

In DE-A-2442149 ist ein Gefäß zur Blutabnahme mit anschließender Zentrifugation beschrieben, bei dem die Auslaßöffnung mit Hilfe eines Stopfens verschlossen ist. Zur Öffnung der Auslaßöffnung ist das manuelle Abnehmen des Stopfens erforderlich.

In DE-A-2328718 ist eine Einwegspritze beschrieben, bei der eine Auslaßöffnung durch eine aufgeschraubte Verschlußkappe verschlossen ist.

In DE-A-1541115 ist eine Einmalversandspritze beschrieben, bei der die Einlaßöffnung durch eine halbkugelförmige Kappe verschlossen ist.

In US-A-5,003,988 ist ein Apparat zum Nachweis biologischer Substanzen beschrieben, bei dem die Flüssigkeit durch eine zylindrische durchgepreßt wird.

In DE-A-3639949 ist ein Verfahren zur Trennung von langkettigen Nukleinsäuren an einem Filtermaterial beschrieben, wobei die Probe durch dieses Filtermaterial durchgeführt wird. Es handelt sich um eine Kartusche, die nicht durch Anlegen von Druck geöffnet wird.

In US-A-5,221,483 ist eine Vorrichtung zum Filtrieren von Flüssigkeiten beschrieben, wobei die Flüssigkeit durch poröse Filter bzw. Membranen durchgeführt wird. Eine Öffnung von Einlaß- oder Auslaßöffnungen durch Druck findet nicht statt.

In Leonhardt et al. (Amicon Biosolutions, 4/1994, Seiten 2-7) ist ein System zur Ultrafiltration von Flüssigkeiten beschrieben, bei dem die Flüssigkeit durch Zentrifugation durch einen Filter transportiert wird.

In Quiagen News, Nr. 1/94, Seiten 1-20, ist ein System beschrieben, bei dem Flüssigkeiten durch Gefäße gesaugt werden können. Die Auslaßöffnungen dieser Gefäße sind jedoch nicht reversibel zu öffnen bzw. zu verschließen. Ebenfalls beschrieben ist ein Gefäß zur Reinigung von Nukleinsäuren, bei dem die Flüssigkeit durch Zentrifugation durch ein Filtermaterial durchgeführt wird. Auch hier findet jedoch keine Öffnung einer Auslaßöffnung durch Druck statt.

Das letztgenannte Gefäß ist auch in Quiagen News 2/94, Seiten 1-14, beschrieben.

Aufgabe der vorliegenden Erfindung war es, die derzeit bekannten Verfahren zur Behandlung von Flüssigkeiten durch Bereitstellung eines neuen Gefäßes zu verbessern.

Gegenstand der Erfindung ist ein Gefäß zur kontaminationsreduzierten Behandlung von Flüssigkeiten mit einer Einlaß- und einer Auslaßöffnung, wobei die Auslaßöffnung durch ein Bauteil verschlossen ist, welches elastisch gegen die Auslaßöffnung drückt und durch Unterdruck oder Überdruck reversibel geöffnet werden kann.

Das Gefäß gemäß der vorliegenden Erfindung kann prinzipiell jede beliebige Form haben. Es weist im allgemeinen einen Innenraum auf, welcher zur Aufnahme der gewünschten Menge an Flüssigkeit ausreicht. Das Gefäß hat hierzu eine innere Form (A17) und eine äußere Form (A19). Die innere und äußere Form können prinzipiell beliebig gewählt werden. Bevorzugt ist die innere Form jedoch im Bereich der Flüssigkeitsaufnahme möglichst glatt und weist keine oder möglichst keine bzw. wenige Vorsprünge oder Einbuchtungen in dem Bereich, der mit der Flüssigkeit in Kontakt kommt, auf, in denen sich Flüssigkeitsreste halten können. Besonders bevorzugt sowohl in Gebrauch als auch der Herstellung haben sich im wesentlichen hohlzylindrische Gefäße erwiesen, die am einen Ende die Einlaßöffnung (A10) und am anderen Ende die Auslaßöffnung (A11) haben.

In der Analytik verwendbare Gefäße haben bevorzugt eine Länge zwischen 100 und 5 mm, bevorzugt ca. 50 mm, und einen inneren Durchmesser zwischen 2 und 20 mm, bevorzugt ca. 8 mm.

Bevorzugt im Sinne der Erfindung verjüngt sich das Gefäß im Bereich der Auslaßöffnung, so daß es im Bereich der Auslaßöffnung einen Durchmesser hat, der wesentlich kleiner ist als der Durchmesser des übrigen Gefäßes.

Im Sinne der Erfindung ist diese Auslaßöffnung durch ein Bauteil (A12) verschlossen, welches elastisch gegen die Auslaßöffnung (A11) drückt (selbstverschließend). Hierbei kann das Bauteil selbst aus einem elastischen Material bestehen, welches gegen die Öffnung drückt, z. B. Gummi oder Silikon, oder mit einem elastischen Material verbunden sein, welches das Bauteil gegen die Öffnung drückt, z. B. einer Feder oder ebenfalls einem Gummi. Die Andruckkraft wirkt bevorzugt senkrecht und permanent gegen die Öffnung. Durch die Anwesenheit eines Anpreßdruckes auf die Öffnung und den die Öffnung umgebenden Rand unterscheidet sich der erfindungsgemäße Verschluß von anderen Verschlüssen. Viele der als Ventile auf anderen Geräten bekannten Verschlüsse sind erfindungsgemäß verwendbar. Ein weiteres bevorzugtes Merkmal des Verschlusses ist es, daß er durch Anlegen eines Unterdruckes an die dem Innenraum des Gefäßes abgewandte Seite zu öffnen ist. Hierbei öffnet sich zweckmäßigerweise zwischen dem elastischen Material und dem Rand der Auslaßöffnung ein Spalt, durch welchen Flüssigkeit aus dem Innenraum des Gefäßes durch die Austrittsöffnung nach außen treten kann. Zur Öffnung des Ventils und Beförderung der Flüssigkeit aus dem Gefäß durch die Auslaßöffnung heraus hat es sich als zweckmäßig erwiesen, eine Druckdifferenz von zwischen 0,4 und 0,6 bar zu wählen, in der Art, daß der höhere Druck im Gefäß und der niedrigere Druck außerhalb des Gefäßes angelegt wird. Das wird entweder durch Anlegen von Druck im Innern des Gefäßes oder (bevorzugt) durch Anlegen eines Vakuums außerhalb des Gefäßes (insbesondere im Bereich der Auslaßöffnung) erreicht.

Im Folgenden werden unter Bezugnahme auf die Abbildungen einige Ausführungsformen von Verschlüssen beschrieben.

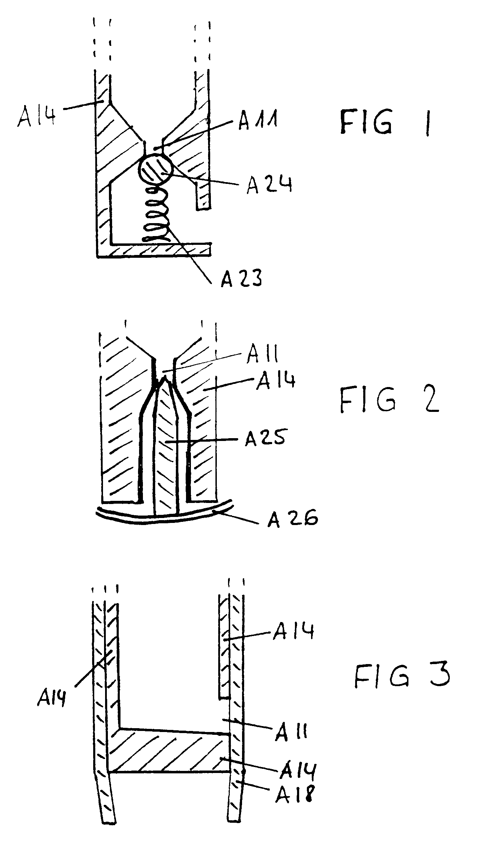

In Figur 1 ist ein Kugelventil gezeigt. Durch eine Spiralfeder (A23) wird eine Kugel (A24) aus Metall, z. B. Stahl, oder Kunststoff, z. B. Nylon, die darüber hinaus noch mit einer elastischen Oberfläche überzogen sein kann, permanent gegen eine sich bevorzugt verengende Auslaßöffnung gedrückt. Die Federkraft ist hierbei so bemessen, daß sie größer ist als die durch Schwerkraft durch die Flüssigkeit im Gefäß auf die Auslaßöffnung wirkende Kraft und die Kraft, welche während eventueller Behandlungsschritte auftreten kann, z. B. beim Einschieben eines geeigneten Formkörpers durch die im Gefäß stehende Flüssigkeit, auf die Auslaßöffnung wirkt. Sie soll jedoch nicht wesentlich größer sein, da sich sonst das Ventil nur schwer durch Anlegen von Unterdruck öffnen läßt.

In Figur 2 ist ein Nadelventil gezeigt. Hier wird eine die Auslaßöffnung verschließende Nadel (A25) durch eine Blattfeder (A26) oder ein Gummiband von unten gegen die Auslaßöffnung gedrückt. Die Austrittsöffnung ist hier ein Durchlaß in einem Austrittsstutzen (A14).

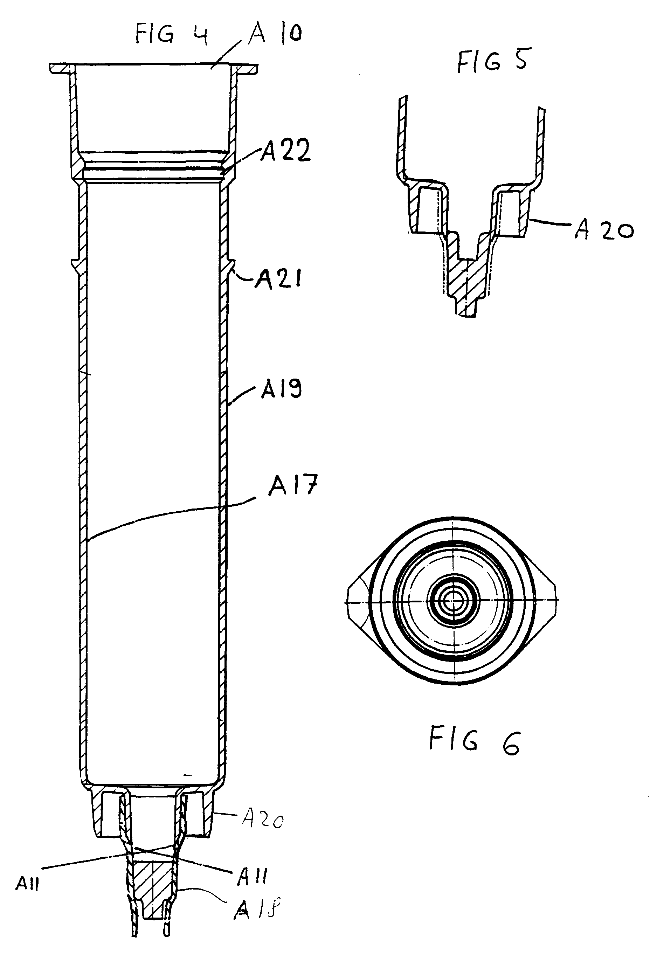

In Figur 3 ist eine bevorzugte Ausführungsform eines Verschlusses in Form eines Schlauchventils gezeigt. Über einen Austrittsstutzen (A14), der eine seitliche Austrittsöffnung (A11) aufweist, ist ein dünnwandiger Gummischlauch gezogen, der an den Außenwänden des Austrittsstutzens eng gespannt anliegt, so daß zwischen dem Rand um die Austrittsöffnung nicht genügend Raum zum Durchtritt von im Gefäß enthaltener Flüssigkeit ist. Als Material kommen insbesondere Gummi oder Silikon-Kautschuk in Frage. Der Schlauch reicht bevorzugt über die Austrittsstutzen hinaus. Dadurch wird die Zerstäubung von Flüssigkeiten reduziert.

Das Ventil neigt im Gegensatz zu anderen Konstruktionen nicht zur Verstopfung der Auslauföffnung. Das Ventil zeichnet sich dadurch aus, daß es sich sowohl in der Funktion als auch im Wirkungsgrad weitgehend temperaturneutral im Temperaturbereich von 4° bis 100° C und weitgehend viskositätsneutral im Viskositätsbereich 1 bis 100 mPas steuern läßt. Die Durchflußmenge pro Zeit ist bei diesem Ventil über die Druckparameter einstell- und steuerbar.

In Figur 4 ist ein erfindungsgemäßes Gefäß mit einem Schiauchventil wiedergegeben, wobei hier zwei Auslaßöffnungen in einander gegenüberliegenden Seitenwänden vorgesehen sind. Der gezeigte Längsschnitt schneidet die Auslaßöffnungen. Bauteil (A12) ist hierbei ein Schlauch (A18), der so über den Austrittsstutzen gespannt ist, daß die Auslaßöffnungen (A11) überspannt werden. Im oberen Teil des abgebildeten Gefäßes sind weitere bevorzugte Merkmale gezeigt. An der Außenwand (A19) des Gefäßes sind umlaufende Vorsprünge (A21) angebracht, mit deren Hilfe das Gefäß in einer Halteplatte mit Löchern einer Größe von etwas weiter als dem Gefäßdurchmesser festgehalten werden kann. Im Bereich der Einlaßöffnung (A10) ist die Innenform etwas erweitert, um einen innen liegenden Deckel B zum vollständigen Verschluß des Gefäßes aufnehmen zu können. Außerdem ist hier eine innen umlaufende Einkerbung (A22) zu erkennen, mit welcher gewünschtenfalls weitere Formkörper im Gefäß eingerastet werden können.

In Figur 5 ist der Verschluß aus Figur 4 so gezeigt, daß die Auslaßöffnungen nicht geschnitten werden. Hier ist deutlich ein weiteres bevorzugtes Merkmal des Schlauchventils zu erkennen, nämlich die vom Gefäß weg sich verjüngende Außenform des Austrittsstutzens. Diese gewährleistet einerseits eine gute Fixierung des Schlauches auf dem Austrittsstutzen, andererseits verhindert sie durch den erhöhten Anpreßdruck im oberen Teil einen Austritt der Flüssigkeit im geöffneten Zustand des Ventils in Richtung auf das Gefäß hin. Darüber hinaus wirkt eine Verjüngung auf die Stutzenspitze hin einer Zerstäubung der Flüssigkeit und somit der Aerosolbildung entgegen. Auch hier ragt der Schlauch (nur angedeutet gezeigt) über das untere Ende des Austrittsstutzens hinaus. Deutlich zu sehen ist hier auch ein weiteres zweckmäßiges Merkmal, nämlich ein umlaufender Steg (A20). Dieser Steg kann zur Verbindung des Gefäßes mit einem Gerät zum Anlegen von Unterdruck von außen an das Ventil benutzt werden. Er ist daher auf die Form eines geräteseitigen Aufnahmebereiches angepaßt, dichtet mit einem O-Ring die Schnittstelle Gefäß/Gerät ab und sichert das Gefäß vor ungewünschtem Herausziehen des Gefäßes aus den Gerätebohrungen.

In Figur 6 ist eine Obenaufsicht auf ein erfindungsgemäßes Gefäß nach Figur 4 gezeigt. Hier ist außerdem ein generelles Merkmal erkennbar, nämlich die mögliche Anbringung von seitlichen Ansätzen am oberen Ende des Gefäßes, was das freie Ergreifen und Einsetzen des Gefäßdeckels mit Hilfes eines Deckelhändlers ermöglicht und somit das manuelle kontaminationsgefährdende Handling vermeidet.

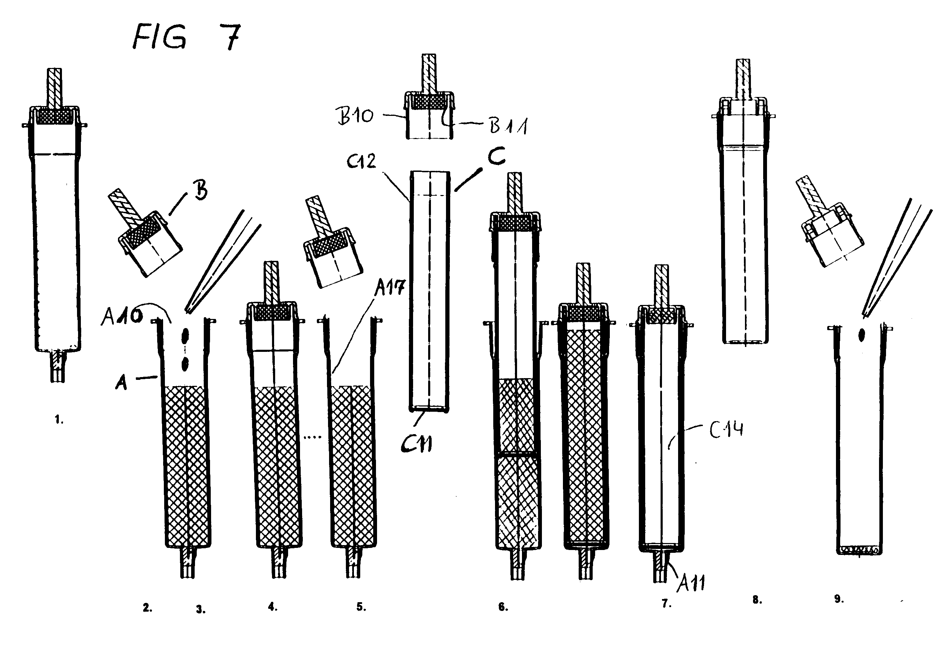

In Figur 7 ist der Ablauf von Beispiel 2 illustriert. Das erfindungsgemäße Gefäß kann außerdem weitere Bau- und Funktionselemente beinhalten, die für die gewünschte Funktion des Gefäßes erforderlich sind. Soll das Gefäß beispielsweise zur Entfernung partikulärer Gegenstände aus einer Flüssigkeit, z. B. Zellen verwendet werden, kann es im Innenraum zwischen Einlaß- und Autrittsöffnung ein Filtermaterial (A15, in FIG. 7 nicht gezeigt) enthalten, durch welches zwar die Flüssigkeit, nicht jedoch die Zellen durchtreten können.

Eine weitere Möglichkeit zur Entfernung von Inhaltsstoffen, z. B. gelösten Stoffe, wie Antikörpern, Zellen oder Nukleinsäuren, aus der Flüssigkeit, ist bei Einbringen eines Absorbermaterials (A16, ebenfalls in FIG. 7 nicht gezeigt), an welches der Inhaltsstoff binden kann, gegeben. Das Absorbermaterial kann entweder durch einen Filter oder, im Falle magnetischer Teilchen, durch einen Magneten am Austritt aus dem Gefäß gehindert werden.

Die Außenform des Gefäßes ist bevorzugt nach unten leicht konisch zulaufend. Dadurch ist, wenn das Gefäß zur Durchführung von Heiz- bzw. Kühlvorgängen in eine Ausnehmung eines Heizblocks eingesteckt ist, die ja wegen des günstigeren Wärmeübergangs bevorzugt sehr eng an der Außenform des Gefäßes anliegen sollte, eine leichtere Entnahme aus dem Heizblock auch nach mehreren Temperaturzyklen gewährleistet.

Die Wandstärke im Hohlzylinderbereich des Gefäßes ist bevorzugt so gestaltet, daß ein guter Wärmedurchgang von außen auf die Flüssigkeit in dem Gefäß gewährleistet ist und darüber hinaus eine geringe Dämpfung evtl. angelegter Magnetfelder erfolgt. Das Material des Gefäßes wird so gewählt, daß es in einem Temperaturbereich von 4° bis 100° C formstabil ist. Als geeignete Materialien haben sich Kunststoffe, wie vom Polypropylen-Typ, erwiesen, da sie einerseits die obigen Bedingungen erfüllen können und außerdem durch Spritzgußverfahren auf einfache Weise erfindungsgemäße Gefäße daraus hergestellt werden können.

Die selbstverschließende Auslauföffnung verhindert das Zurückströmen der bereits aus der Auslauföffnung fließenden Flüssigkeit in den Reaktionsraum. Die Kontamination der Probe mit dem Waste ist somit ausgeschlossen. Dies ist insbesondere wichtig, wenn im Reaktionsraum ein (wenn auch leichter) Unterdruck angelegt werden soll (z. B. bei der Entfernung des oben genannten Formkörpers aus dem Gefäß).

Das erfindungsgemäße Gefäß ist hervorragend zur kontaminationsreduzierten Behandlung von Flüssigkeiten geeignet. Dazu wird gegebenenfalls der Deckel abgenommen, die Flüssigkeit eingefüllt, gegebenenfalls Reagenzien zugegeben, eine geeignete Zeit (gewünschtenfalls bei geschlossenenem Deckel) inkubiert und anschließend die Flüssigkeit durch die Auslaßöffnung durch Anlegen eines Unterdruckes, welcher das Ventil öffnet, nach außen abgesaugt. Die Flüssigkeit kann entweder weiter verwendet werden, oder, für den Fall, daß Inhaltsstoffe in dem Gefäß verblieben sind, verworfen und das Gefäß zur Gewinnung der in ihm gebundenen Inhaltsstoffe weiterbehandelt werden.

In dem erfindungsgemäßen Gefäß können eigentlich alle beliebigen chemischen und biologischen Reaktionen durchgeführt werden.

Dazu gehören insbesondere Verfahren zur Analyse von Inhaltsstoffen von Probenflüssigkeiten oder Verfahren zur Isolierung von Inhaltsstoffen aus Probenflüssigkeiten. Reaktionsschritte, die hierin durchgeführt werden können, sind insbesondere Immobilisierung (Bindung) von Inhaltsstoffen an eine feste Matrix, Abtrennung der Flüssigkeit von den Inhaltsstoffen, Behandlung von immobilisierten Inhaltsstoffen, wie z. B. Lyse von immobilisierten Zellen, Waschschritte oder Modifizierung von immobilisierten Inhaltsstoffen, z. B. durch Markierung mit einer nachweisbaren Gruppe.

Besonders vorteilhaft ist das erfindungsgemäße Gefäß für die Probenvorbereitung für die Analyse von Nukleinsäuren einsetzbar.

Ebenfalls Gegenstand der Erfindung ist daher ein Verfahren zur Isolierung eines Inhaltsstoffes aus einer Probe durch
- Einfüllen der Probe in ein Gefäß über eine Einlaßöffnung (A10),
- Zugabe einer Matrix, an der eine Immobilisierung des Inhaltsstoffes stattfinden kann,
- Inkubation unter für die Immobilisierung geeigneten Bedingungen und
- Entfernung der Flüssigkeit durch eine Auslaßöffnung(A11), wobei die Auslaßöffnung durch ein Bauteil (A12) verschlossen ist, welches elastisch gegen die Auslaßöffnung drückt und durch Unterdruck oder Überdruck reversibel geöffnet werden kann.

Das erfindungsgemäße Verfahren und das Gefäß sind besonders gut zur automatisierten Bearbeitung von Flüssigkeiten geeignet.

Die Erfindung wird durch die folgenden Beispiele näher beschrieben:

### Beispiel 1

Die Ausführungsform des erfindungsgemäßen Gefäßes wird beschrieben durch die Gesamtlänge von 45,3 mm, den Außendurchmesser von 8,8 mm und den Innendurchmesser von 6,95 mm. Das Tube ist untergliedert in drei funktionale Bereiche.

Der erste, oberste Bereich, die Einlaßöffnungsgeometrie, ist so gestaltet, daß das Gefäß über die Dichtungslippen eines entsprechenden Deckels und durch die Fixierung auf dem Gefäßrand (A10) gegenüber der Umgebung geschlossen werden kann. Im Inneren des Einlaßöffnungsbereiches befindet sich ein Einkerbungsring (A22) in der Innenwandung zur Einrastung eines evtl. Formkörpers. Der Einlaßöffnungsbereich wird beschrieben durch eine Länge von 6,1 mm, einen Außendurchmesser von 8,8 mm, einen Innendurchmesser von 6,95 mm. Die Einkerbung im Inneren des Tubes befindet vom Rand (1) nach unten gemessen 6,15 mm entfernt. Die Einkerbung ist umlaufend 0,10 mm tief und 0,5 mm hoch.

Der zweite Bereich des Gefäßes stellt ein hohlzylinderförmiges Röhrchen mit einer Länge von 32,4 mm, Außendurchmesser (A19) von 7,8 mm und Innendurchmesser von 6,95 mm dar.In diesem Bereich finden sich die Halteelemente (A21) zur Fixierung in einer Lochplatte.

Der dritte, unterste Bereich, die Auslauföffnung, besitzt eine kegelstumpfartige Form (d1 = 2,8 mm, d2 = 2,1 mm, h = 6,8 mm) mit einer zylinderförmigen Verjüngung, einem Außendurchmesser von 1 mm und einer Höhe von 1 mm. Im Inneren ist die Auslaufgeometrie so gestaltet, daß über einen vertikalen Innenkanal (d = 1,5 mm, h = 3,8 mm) und zwei horizontal verlaufenden Auslauföffnungen (A11)(d = 1,0 mm, h = 1,0 mm), welche mit einem hochflexiblen Kunststoff-Schlauch (A18)(aus Silastik der Firma Reichelt Chemietechnik; Innendurchmesser = 2,0 mm, Wandstärke = 2,4 mm) abgedichtet werden, die Flüssigkeit bei Bedarf nach außen befördert werden kann. Duch einen definierten Unterdruck bzw. Überdruck wird die Auslauföffnung nach unten geöffnet und die Flüssigkeit zerstäubungsfrei abgeführt. Um die kegelstumpfartige Auslauföffnung befindet sich ein umlaufender Steg (A20) mit einer Höhe von 2,5 mm, einer Wandstärke von 3,5 mm und einem Radius von 1,65 mm. Die Außengeometrie ist so gestaltet, daß sie geeignet ist zur Aufnahme und Freigabe des Gefäßes in einem entsprechenden Aufnahmeblock des Gerätes, in dem sich auch die Vorrichtung zum Saugen befindet.

### Beispiel 2

In einer besonderen Ausführungsform für die Aufarbeitung nukleinsäurehaltiger Probenlösungen, werden die in Figur 7 illustrierten Arbeitsschritte durchgeführt. In einem ersten Schritt wird das mit einem Deckel (B) verschlossene Gefäß (1.) geöffnet (2.), eine zellhaltige Probenflüssigkeit durch die Einlaßöffnung (A10) in das erfindungsgemäße Probegefäß (A) einpipettiert (3.) und in geschlossenem Zustand mit einem Material inkubiert (4.), an welches die Zellen gebunden werden, aus denen Nukleinsäuren gewonnen werden sollen. Hierzu kann dieses Material entweder spezifische Bindeeigenschaften für die Oberfläche der Zellen aufweisen, z. B. durch Immobilisierung von Antikörpern gegen Oberflächenantigene oder ein Absorbermaterial (A16), es kann jedoch auch ein Material mit Filtereigenschaften (A15) vorgesehen sein, durch welches die Zellen zurückgehalten werden, wenn die Flüssigkeit durch das Material durchtritt, z. B. aus dem Probengefäß entfernt wird. Bedingungen für die Immobilisierung von Zellen an Oberflächen sind dem Fachmann bekannt, z. B. aus Methods in Enzymology Vol. 171, Biomembranes / Part R Transport Theory: Cell and Model Membranes, Edited by Sidney Fleischer, Becca Fleischer, Department of Molecular Biology, Vanderbilt University, Nashville, Tennessee.

In einem weiteren Schritt wird die Flüssigkeit durch den erfindungsgemäßen Verschluß aus dem Probengefäß entfernt, während Zellen, deren Nukleinsäuren isoliert werden sollen, in an das Material gebundenem Zustand im Probengefäß zurückbleiben. Sofern es sich bei dem zellbindenden Material um partikuläre Materialien handelt, kann ein Zurückhalten auch dadurch erreicht werden, daß das Material magnetisch ist und ein Magnetfeld von außen an das Probengefäß angelegt wird, welches so stark ist, daß das partikuläre Material im Probengefäß zurückbleibt, wenn die Flüssigkeit entfernt wird. Sofern die Auslaßöffnung im unteren Teil des Probengefäßes und unterhalb der zurückgehaltenen Zellen gelegen ist, kann die Flüssigkeit unter Anlegen eines leichten Vakuums abgesaugt werden.

Zur weitgehenden Entfernung eventuell störender Probenbestandteile von den Zellen können ein oder mehrere Waschschritte vorgesehen werden. Hierzu wird in das Probengefäß eine Waschflüssigkeit eingefüllt, in der sich eventuelle Verunreinigungen lösen, die jedoch die Bindung der Zellen an die Oberfläche des zellbindenden Materials nicht wesentlich beeinträchtigen. Solche Waschlösungen sind dem Fachmann z. B. aus den Zellseparationsprotokollen bzw. aus entsprechenden Reinigungskitsprotokollen für Nukleinsäuren bekannt. Sie richten sich im wesentlichen nach der Art der Bindung der Zellen an das Material.

Nachdem gegebenenfalls die letzte Waschlösung aus dem Probengefäß (A) entfernt wurde, werden die gereinigten, angereicherten Zellen mit einer geeigneten Lyseflüssigkeit zur Freisetzung der Nukleinsäuren aus den Zellen in Kontakt gebracht. Die Reagenzien dieser Lyselösung richten sich weitgehend nach der Art der immobilisierten Zellen. Sofern es sich bei den Zellen um Bakterien handelt, enthält die Lyselösung bevorzugt Proteinase K zum Abbau der Zellwand. Gewünschtenfalls wird die Lyse durch Erhitzen bzw. Abkühlen sowie Mischen der Reaktionsmischung unterstützt. Sofern es sich bei dem zellbindenden Material um magnetische Partikel handelt, kann die Mischung auch mittels Magneten vorgenommen werden. Außerdem ist eine Mischung durch Schütteln des Probengefäßes möglich. An Ende dieses Aufschlusses liegen die zu isolierenden Nukleinsäuren frei in der Lösung vor.

Auch während der Lyse ist das Reaktionsgefäß bevorzugt durch einen Deckel verschlossen, um Kontaminationen aus der Umgebung zu verhindern. Nach Ende der Lyse wird der Deckel, bevorzugt mit Hilfe einer entsprechenden mechanischen Vorrichtung, entfernt (5.). Danach wird in das Probengefäß, welches eine Mischung von Abbauprodukten der Zellen sowie die Nukleinsäuren enthält, ein Formkörper (C) eingeführt, dessen äußere Kontur (C12) auf die innere Kontur (A17) des Probengefäßes abgestimmt ist. Dieser Formkörper ist hohl und in Richtung auf das Probengefäß und die Reaktionsmischung hin durch eine poröse Matrix, z.B. einen Filter, (C11) verschlossen. Die Einführung des Formkörpers (C) erfolgt bevorzugt mit Hilfe eines Bauelementes (B11) des Deckels (B), der außerdem ein Bauelement (B10) enthält, welches zum Verschluß des Probengefäßes geeignet ist. In diesem Fall wird der Formkörper gleichzeitig mit dem Verschließen des Probengefäßes in das Probengefäß eingeführt (6.). Während dieses Vorgangs wird außerdem die Reaktionsmischung durch den Filter (C11) in den Hohlraum (C14) des Formkörpers eindringen. Durch das Vorsehen des Filters können einerseits große Partikel an dem Eintritt in den Hohlraum gehindert werden und andererseits kann, wenn der Filter nukleinsäurebindende Eigenschaften hat, schon während des Durchtritts der Reaktionsmischung eine Bindung der Nukleinsäuren an den Filter erreicht werden. In diesem Fall ist es zweckmäßig, ein glasfaserhaltiges Filtermaterial zu wählen.

In einem nächsten Schritt wird die verbleibende Lysereaktionsmischung aus der durch A und C gebildeten Vorrichtung entfernt, z. B. durch Absaugen durch eine untenliegende Auslaßöffnung (A12) im Probengefäß (7.). Auch die in den Hohlkörper (C14) des Formkörpers eingedrungene Lösung wird somit entfernt, so daß der Filter möglichst keine Flüssigkeitsreste mehr enthält.

Die an den Filter gebundenen Nukleinsäuren können nun, entweder im Probengefäß oder nach Entnähme daraus (8.), durch Kontaktieren (9.) mit einer Lösung einer nukleinsäuredesorbierenden Substanz (z. B. einer niedrigkonzentrierten Salzlösung) vom Filter gelöst und weiterverarbeitet werden (Analyse, Modifizierung, Amplifikation etc.).

### Bezugszeichenliste

A Probegefäß
   - 10: Einlaßöffnung
   - 11: Auslaßöffnung
   - 12: elastisches Material
   - 13: Seitenwand des Austrittsstutzens A14
   - 14: Austrittsstutzen
   - 15: Filtermaterial
   - 16: Absorbermaterial
   - 17: innere Form
   - 18: elastischer Schlauch
   - 19: Außenform
   - 20: umlaufender Steg
   - 21: Halteelement
   - 22: Element zur Fixierung von weiteren Funktionselementen
   - 23: Spiralfeder
   - 24: Kugel
   - 25: Nadel
   - 26: Blattfeder
B Deckel
   - 10: Bauelement zum Verschluß von A
   - 11: Bauelement zum Ergreifen von C
C Formkörper
   - 11: poröse Matrix
   - 12: äußere Form
   - 14: Innenraum

## Patentansprüche

1. Gefäß zur kontaminationsreduzierten Behandlung von Flüssigkeiten mit einer Flüssigkeitseinlaß-(A10) und einer Flüssigkeitsauslaß-(A11)-Öffnung, dadurch gekennzeichnet, daß die Auslaßöffnung durch ein Bauteil (A12) verschlossen ist, welches elastisch gegen die Auslaßöffnung drückt und durch Unterdruck oder Überdruck reversibel geöffnet werden kann.

2. Gefäß gemäß Anspruch 1, dadurch gekennzeichnet, daß das Bauteil eine permanente Kraft in Richtung auf die Auslaßöffnung ausübt.

3. Gefäß gemäß Anspruch 1 oder 2, dadurch gekennzeichnet, daß über die Auslaßöffnung (A11) ein elastisches Material (A12) gespannt ist.

4. Gefäß gemäß Anspruch 1, 2 oder 3, dadurch gekennzeichnet, daß die Auslaßöffnung (A11) in einer Seitenwand (A13) eines Austrittsstutzens (A14) vorgesehen ist.

5. Gefäß gemäß Anspruch 4, dadurch gekennzeichnet, daß die Auslaßöffnung durch einen über den Austrittsstutzen (A14) gezogenen Schlauch (A18) verschlossen ist.

6. Gefäß gemäß Anspruch 5, dadurch gekennzeichnet, daß der Schlauch (A18) über den Austrittsstutzen (A14) hinausragt.

7. Gefäß gemäß Anspruch 4 oder 5, dadurch gekennzeichnet, daß das Gefäß im wesentlichen hohlzylindrisch ist.

8. Gefäß gemäß Anspruch 7, dadurch gekennzeichnet, daß der Hohlzylinder eine leicht konische Außenform (A19) hat, die sich in Richtung auf die Auslaßöffnung (A11) verengt.

9. Gefäß gemäß Anspruch 7, dadurch gekennzeichnet, daß die Innenform (A17) exakt zylindrisch ist.

10. Gefäß gemäß Anspruch 4, dadurch gekennzeichnet, daß die Seitenwand (A13) des Austrittsstutzens (A14) nach außen verjüngt ist.

11. Gefäß gemäß einem der vorangehenden Ansprüche, dadurch gekennzeichnet, daß es zwischen Einlaß- und Auslaßöffnung ein Filtermaterial (A15) enthält.

12. Gefäß gemäß einem der vorangehenden Ansprüche, dadurch gekennzeichnet, daß es zwischen Einlaß- und Auslaßöffnung ein Absorbermaterial (A16) enthält.

13. Gefäß gemäß einem der vorangehenden Ansprüche, dadurch gekennzeichnet, daß die Einlaßöffnung mit einem Deckel (B) verschlossen ist.

14. Gefäß gemäß einem der Ansprüche 4 bis 10, dadurch gekennzeichnet, daß der Austrittsstutzen umlaufend von einem Steg (A20) umgeben ist.

15. Gefäß gemäß einem der vorangehenden Ansprüche, dadurch gekennzeichnet, daß es ein Bauelement (A21) zur Befestigung des Gefäßes in einer Haltevorrichtung aufweist.

16. Gefäß gemäß einem der vorangehenden Ansprüche, dadurch gekennzeichnet, daß es innen umlaufende Einkerbungen (A22) zur Fixierung weiterer Funktionselemente aufweist.

17. Verfahren zur Isolierung eines Inhaltsstoffes aus einer Probe durch
- Einfüllen der Probe in ein Gefäß über eine Einlaßöffnung (A10),
- Zugabe einer Matrix, an der eine Immobilisierung des Inhaltsstoffes stattfinden kann,
- Inkubation unter für die Immobilisierung geeigneten Bedingungen und
- Entfernung der Flüssigkeit durch eine Auslaßöffnung(A11), wobei die Auslaßöffnung durch ein Bauteil (A12) verschlossen ist, welches elastisch gegen die Auslaßöffnung drückt und durch Unterdruck oder Überdruck reversibel geöffnet werden kann.
